# EUROPEAN PATENT APPLICATION

(11) **EP 4 475 073 A1**
(43) Date of publication of application: **11.12.2024**
(21) Application number: 23749505.6
(22) Date of filing: 17.01.2023
(51) Int. Cl.: G06T 7/00

(54) **SIGNAL PROCESSING DEVICE, METHOD, AND PROGRAM**

(30) Priority: 02.02.2022 JP 2022014869
(71) Applicant: Sony Group Corporation, Tokyo 108-0075 (JP)
(72) Inventor: IRIE Atsushi, Tokyo 108-0075 (JP); HOSHIKAWA Leo, Tokyo 108-0075 (JP); OHASHI Takeshi, Tokyo 108-0075 (JP)
(74) Representative: 2SPL Patentanwälte PartG mbB
(86) International application number: PCT/JP2023/001100
(87) International publication number: WO 2023/149188

(57) **Abstract**

The present technology relates to a signal processing apparatus, a signal processing method, and a program that can realize cost reduction in recognition processing using a plurality of frames.

When performing recognition processing for each frame of a plurality of frames, the signal processing apparatus performs the processing, for at least a part of the frames, using only a part of data in the entire frame. The present technology can be applied to a recognition processing apparatus for performing flow analysis.

## Description

### TECHNICAL FIELD

The present technology relates to a signal processing apparatus, a signal processing method, and a program, and more particularly, to a signal processing apparatus, a signal processing method, and a program that can realize cost reduction in recognition processing using a plurality of frames.

### BACKGROUND ART

In order to perform object detection, posture estimation, tracking, flow analysis, or the like, improvement of recognition performance of recognition processing using a plurality of frames and weight reduction of recognition processing have been studied.

However, as the number of frames increases, the cost for data input increases, for example, it takes time to access a memory or power consumption increases due to reading and writing data.

For example, in order to suppress processing time and power consumption, Patent Document 1 proposes setting a part of a pixel region as a read unit, performing recognition processing on a pixel signal for each read unit, and outputting a recognition result. In this case, since the recognition processing can be stopped when the recognition result is recognized even though all the read units are not input, the processing time can be suppressed.

### CITATION LIST

### PATENT DOCUMENT

Patent Document 1: Japanese Patent Application Laid-Open No. 2020-39123

### SUMMARY OF THE INVENTION

### PROBLEMS TO BE SOLVED BY THE INVENTION

However, in the technology described in Patent Document 1, since the recognition processing is performed on divided regions of a certain unit, it is difficult to grasp the entire image at once.

The present technology has been made in view of such a situation, and aims to realize cost reduction in recognition processing using a plurality of frames.

### SOLUTIONS TO PROBLEMS

A signal processing apparatus according to one aspect of the present technology includes a recognition unit that performs, when performing recognition processing for each frame of a plurality of frames, the recognition processing, for at least a part of the frames, using only a part of data in the entire frame.

In one aspect of the present technology, when performing recognition processing for each frame of a plurality of frames, the recognition processing is performed, for at least a part of the frames, using only a part of data in the entire frame.

### BRIEF DESCRIPTION OF DRAWINGS

Fig. 1 is a block diagram illustrating a first configuration example of a signal processing apparatus according to an embodiment of the present technology.
Fig. 2 is a diagram illustrating a state in which data of a plurality of frames is input to a conventional recognition unit at an ultra-high speed.
Fig. 3 is a diagram illustrating an outline of a conventional technology.
Fig. 4 is a diagram illustrating a first recognition processing method of the present technology.
Fig. 5 is a diagram illustrating a second recognition processing method of the present technology.
Fig. 6 is a diagram illustrating a third recognition processing method of the present technology.
Fig. 7 is a diagram illustrating a fourth recognition processing method of the present technology.
Fig. 8 is a diagram illustrating a fifth recognition processing method of the present technology.
Fig. 9 is a diagram illustrating a sixth recognition processing method of the present technology.
Fig. 10 is a diagram illustrating a seventh recognition processing method of the present technology.
Fig. 11 is a diagram illustrating an eighth recognition processing method of the present technology.
Fig. 12 is a flowchart illustrating processing of the signal processing apparatus in Fig. 1.
Fig. 13 is a diagram illustrating each effect of the first to eighth recognition processing methods.
Fig. 14 is a block diagram illustrating a second configuration example of a signal processing apparatus.
Fig. 15 is a diagram illustrating a first reset determination method.
Fig. 16 is a flowchart illustrating processing of the signal processing apparatus in Fig. 14.
Fig. 17 is a block diagram illustrating a third configuration example of a signal processing apparatus.
Fig. 18 is a diagram illustrating a second reset determination method.
Fig. 19 is a flowchart illustrating processing of the signal processing apparatus in Fig. 17.
Fig. 20 is a block diagram illustrating a fourth configuration example of a signal processing apparatus.
Fig. 21 is a block diagram illustrating a configuration example of a computer.

### MODE FOR CARRYING OUT THE INVENTION

Hereinafter, modes for carrying out the present technology will be described. The description will be given in the following order.
1. First Embodiment (Basic Configuration)
2. Second Embodiment (First Additional Configuration of Reset Determination Unit)
3. Third Embodiment (Second Additional Configuration of Reset Determination Unit)
4. Fourth Embodiment (Third Additional Configuration of Reset Determination Unit)
5. Others

### <1. First Embodiment (Basic Configuration)>

### <First configuration example of signal processing apparatus>

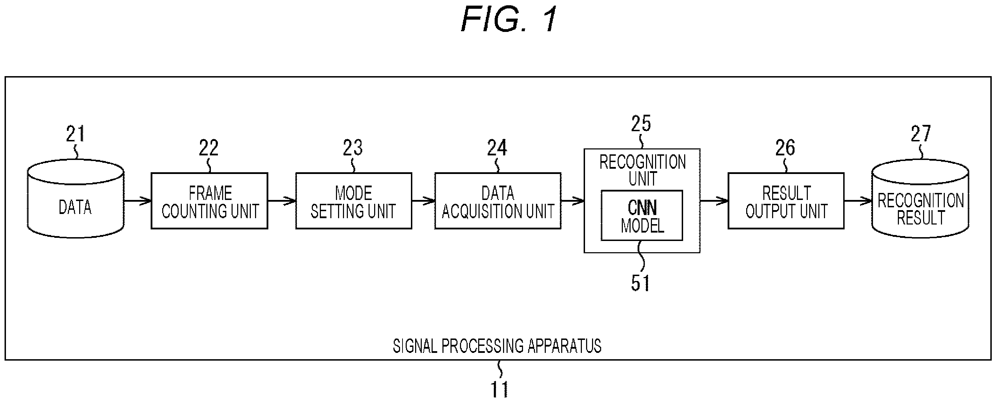

Fig. 1 is a block diagram illustrating a first configuration example of a signal processing apparatus according to an embodiment of the present technology.

A signal processing apparatus 11 in Fig. 1 is a recognition processing apparatus that performs recognition processing of an object or the like using a plurality of frames of 1,000 frame par second (fps) image data in order to perform, for example, object detection, posture estimation, tracking, flow analysis, or the like.

In Fig. 1, the signal processing apparatus 11 includes a data storage unit 21, a frame counting unit 22, a mode setting unit 23, a data acquisition unit 24, a recognition unit 25, a result output unit 26, and a result storage unit 27.

The data storage unit 21 stores image data acquired from a sensor.

The frame counting unit 22 reads the image data stored in the data storage unit 21 for each frame, and counts the number of frames indicating the position of the read frame from an initial frame which is the first frame. The frame counting unit 22 outputs the read frame and the counted number of frames to the mode setting unit 23.

The mode setting unit 23 sets a processing mode indicating what kind of data the recognition unit 25 uses to perform recognition processing on the basis of a user's operation signal input from an operation input unit (not illustrated).

On the basis of the set processing mode and the number of frames supplied from the frame counting unit 22, the mode setting unit 23 determines data to be input to the recognition unit 25 as to the position of the frame supplied from the frame counting unit 22 and what kind of data is to be acquired from the frame. Although details will be described later, what kind of data or a part of data is acquired from each frame is determined here. The mode setting unit 23 outputs, to the data acquisition unit 24, information regarding the determined data and the frame supplied from the frame counting unit 22.

The data acquisition unit 24 performs signal processing as necessary on the frame with reference to the information regarding the data supplied from the mode setting unit 23, acquires data of the kind determined by the mode setting unit 23, and outputs the acquired data to the recognition unit 25.

The recognition unit 25 performs recognition processing of an object or the like by a convolutional neural network (CNN) using the data supplied from the data acquisition unit 24. The CNN is a neural network including a convolution layer, a pooling layer, an activation function, and the like.

The recognition unit 25 includes a plurality of CNN models 51 that perform recognition processing by machine learning. The data acquisition unit 24 inputs each of data of a frame t, data of a frame t+1, data of a frame t+2, ... to the respective CNN models.

A CNN model 51 that performs the recognition processing on the frame t performs the recognition processing on the data of the frame t, and outputs the recognition result of the frame t to a CNN model 51 that performs the recognition processing on the next frame t+1. The CNN model 51 that performs the recognition processing on the frame t+1 performs the recognition processing on the data of the frame t+1 with reference to the recognition result of the frame t, and outputs the recognition result of the frame t+1 to a CNN model 51 that performs the recognition processing on the next frame t+2.

In such a way, since the recognition processing for each frame is connected recurrently, the recognition performance can be further improved as the number of frames to be processed increases.

The result output unit 26 outputs the recognition result by the one or more CNN models 51 to the result storage unit 27.

The result storage unit 27 stores the recognition result supplied from the result output unit 26.

### <Conventional input of a plurality of frames>

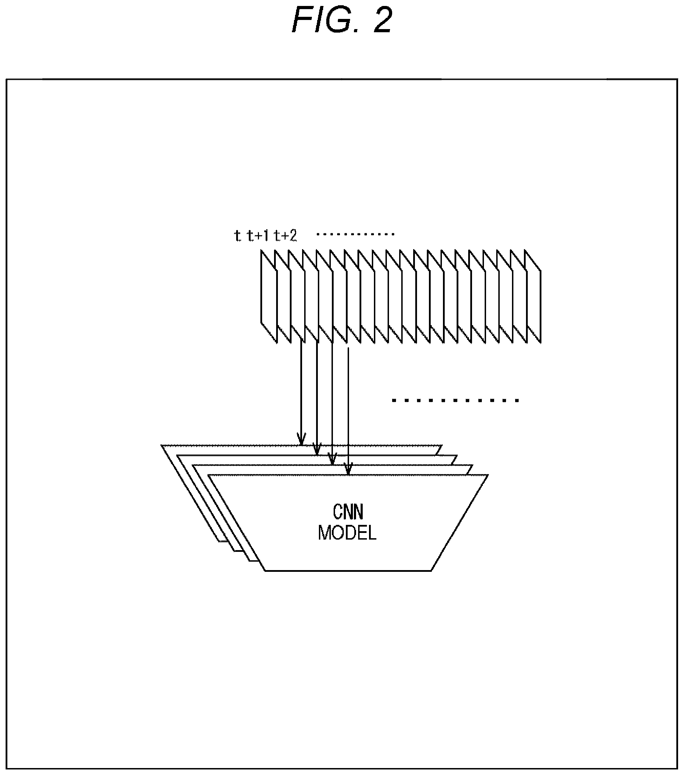

Fig. 2 is a diagram illustrating a state in which data of a plurality of frames is input to a conventional recognition unit at an ultra-high speed frame rate.

The recognition unit has a CNN model that performs the recognition processing by machine learning, and the data of the frame t, the data of the frame t+1, the data of the frame t+2, ... of data read from a storage unit or the like are sequentially input to the CNN model.

However, as described above, as the number of frames increases, the cost for data input increases, for example, it takes time to access a memory or power consumption increases due to reading and writing data.

For example, in a case where it is desired to process 1000 fps data without delay, memory access to the data, for example, may become a bottleneck in processing.

Here, in order to suppress processing time and power consumption, Patent Document 1 proposes, as described above, setting a part of a pixel region as a read unit, performing recognition processing on a pixel signal for each read unit, and outputting a recognition result.

### <Outline of conventional technology>

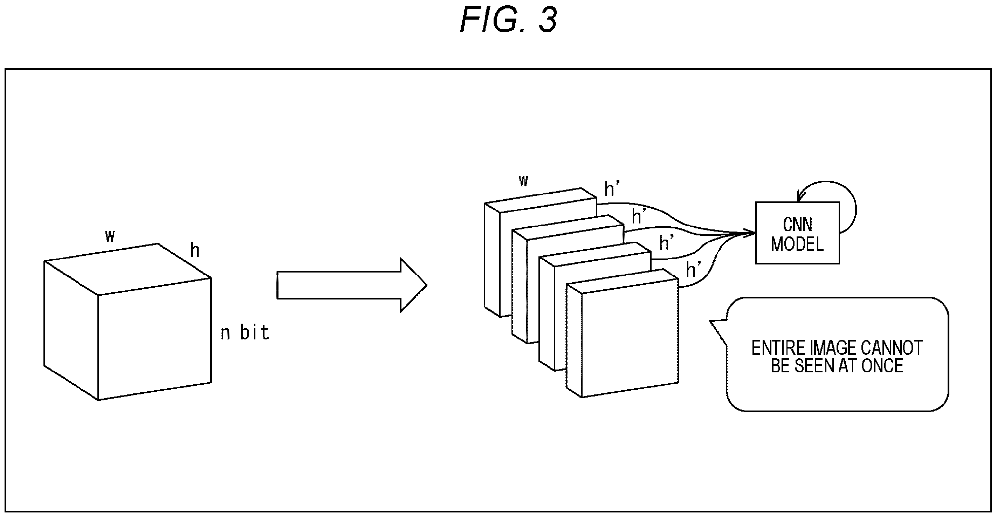

Fig. 3 is a diagram illustrating an outline of a conventional technology described in Patent Document 1.

In Fig. 3, an example is illustrated in which, in a frame including width w × height h pixels each having n-bit data, for example, width w × height h' (h' × 4 = h) is set as a read unit, and the n-bit data pieces are input to a CNN model in the read unit of width w × he.

In this way, by inputting the set read unit, in the CNN model, the recognition processing is performed on the n-bit data pieces in the read unit of width w × height h', and the recognition result is output. In this case, the recognition processing can be stopped when the recognition result is recognized even when all the read units have not been input, so that the processing time can be suppressed.

However, in the technology in Patent Document 1, it is difficult to confirm the entire frame at once until the processing for width w × height h' × 4 ends, that is, the recognition processing of all the data ends.

Therefore, in the present technology, when performing recognition processing for each frame of a plurality of frames, the recognition processing is performed, for at least a part of the frames, using only a part of data in the entire frame.

That is, in the case in the present technology, unlike the case of Patent Document 1, only a part of data in the entire frame is used instead of a part of the pixel region of the frame. As a result, in a case where the processing of the pixel region of the frame ends, the entire frame can be confirmed, and the processing time can be shortened since only a part of the data is used.

As described above, according to the present technology, cost reduction can be achieved in the recognition processing using a plurality of frames.

Hereinafter, the present technology will be described in detail.

### <First recognition processing method of present technology>

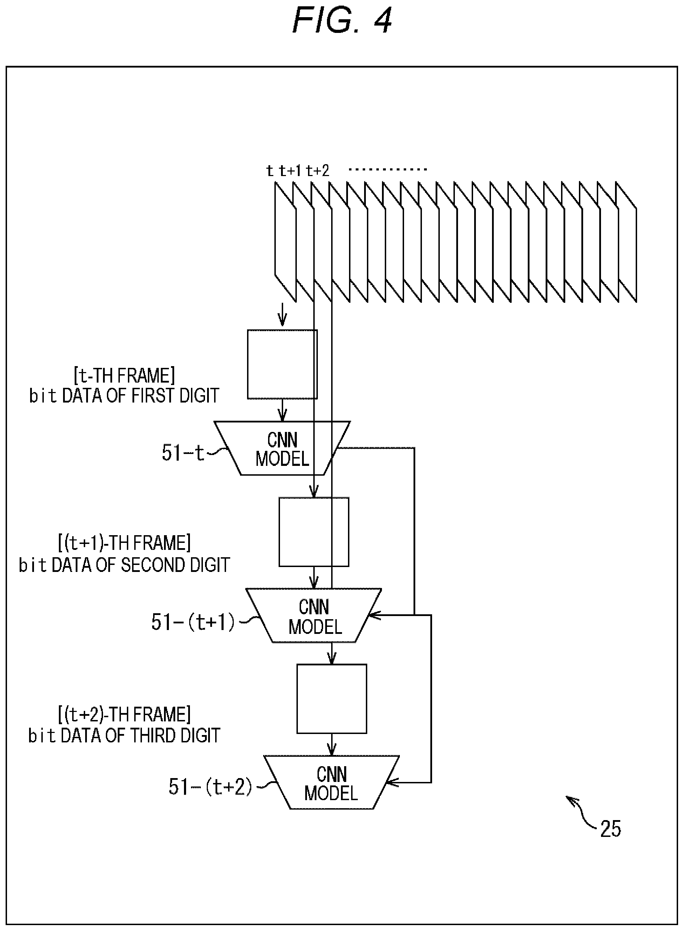

Fig. 4 is a diagram illustrating a first recognition processing method of the present technology.

Fig. 4 illustrates a state in which data of a plurality of frames (1000 fps data) is input to the recognition unit 25. As described above, the recognition unit 25 includes a plurality of CNN models 51-t, 51-(t+1), 51-(t+2), ... that perform recognition processing by machine learning. This similarly applies to the following drawings. In addition, the CNN models 51-t, 51-(t+1), 51-(t+2), ... are referred to as CNN models 51 in a case where the CNN models do not need to be distinguished from each other.

In the case of Fig. 4, for example, image data in which each pixel of one frame includes 8 bits (8 digits × 1 bit) is stored in the data storage unit 21. Note that the image data in different formats may be stored in the data storage unit 21, and in this case, in the data acquisition unit 24, the image data may be converted into image data in which each pixel of one frame includes 8 bits. This similarly applies to the following recognition processing methods.

The data acquisition unit 24 inputs, for the t-th frame, bit data of the first digit to the CNN model 51-t.

The CNN model 51-t performs, for the t-th frame, the recognition processing on the bit data of the first digit, and outputs the recognition result for the t-th frame to the CNN model 51-(t+1).

The data acquisition unit 24 inputs, for the (t+1)-th frame, bit data of the second digit to the CNN model 51-(t+1) .

The CNN model 51-(t+1) performs, for the (t+1)-th frame, the recognition processing on the bit data of the second digit with reference to the recognition result of the t-th frame, and outputs the recognition result of the (t+1)-th frame to the CNN model 51-(t+2).

The data acquisition unit 24 inputs, for the (t+2)-th frame, bit data of the third digit to the CNN model 51-(t+2).

The CNN model 51-(t+2) performs, for the (t+2)-th frame, the recognition processing on the bit data of the third digit with reference to the recognition result of the (t+1)-th frame, and outputs the recognition result of the (t+2)-th frame to the CNN model 51-(t+3).

As described above, the recognition processing for each frame is connected recurrently. In addition, since the processing is repeated for sequential frames, the recognition performance is further improved as the number of frames to be processed increases.

As described above, in the first recognition processing method, the recognition processing is performed, for at least a part of the frames, using only the bit data of a certain digit which is a part of data (8-bit data) in the entire frame.

### <Second recognition processing method of present technology>

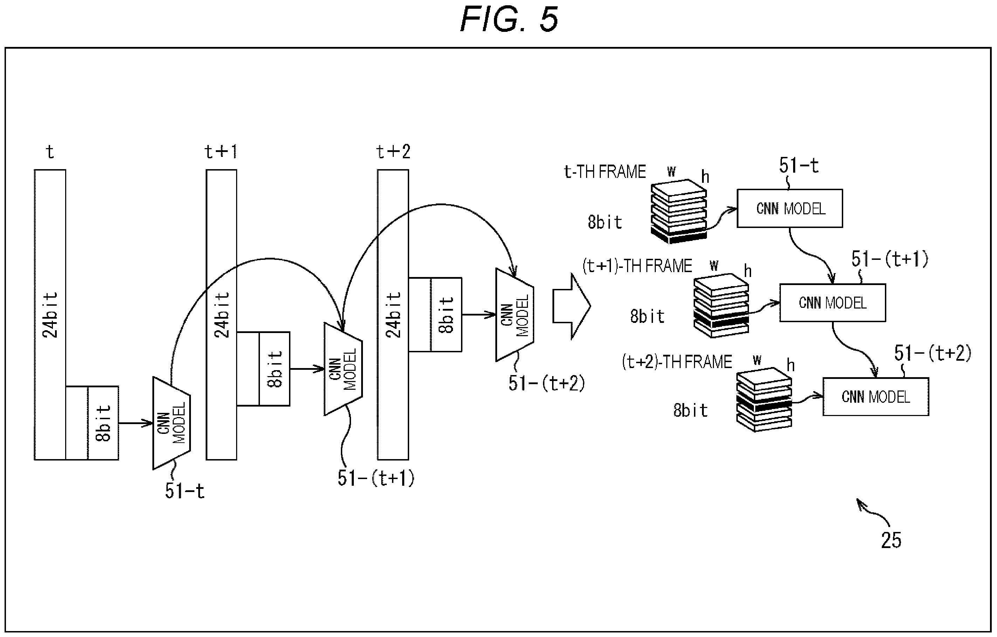

Fig. 5 is a diagram illustrating a second recognition processing method of the present technology.

The second recognition processing method for data of a plurality of frames is illustrated in two dimensions on the left side of Fig. 5, and the second recognition processing method for data of a plurality of frames is illustrated in three dimensions on the right side of Fig. 5.

In the case of Fig. 5, for example, image data in which each pixel of one frame includes 24 bits is stored in the data storage unit 21. The data acquisition unit 24 inputs, for the t-th frame, 8-bit data of the first to eighth digits to the CNN model 51-t.

The CNN model 51-t performs, for the t-th frame, the recognition processing on the 8-bit data of the first to eighth digits, and outputs the recognition result of the t-th frame to the CNN model 51-(t+1).

The data acquisition unit 24 inputs, for the (t+1)-th frame, 8-bit data of the seventh to 14th digits to the CNN model 51-(t+1).

The CNN model 51-(t+1) performs, for the (t+1)-th frame, the recognition processing on the 8-bit data of the seventh to 14th digits with reference to the recognition result of the t-th frame, and outputs the recognition result of the (t+1)-th frame to the CNN model 51-(t+2).

Note that bit data used in adjacent frames may overlap, but need not necessarily overlap.

The data acquisition unit 24 inputs, for the (t+2)-th frame, 8-bit data of the 13th to 20th digits to the CNN model 51-(t+2).

The CNN model 51-(t+2) performs, for the (t+2)-th frame, the recognition processing on the 8-bit data of the 13th to 20th digits with reference to the recognition result of the (t+1)-th frame, and outputs the recognition result of the (t+2)-th frame to the CNN model 51-(t+3).

As described above, the recognition processing for each frame is connected recurrently. In addition, since the processing is repeated for sequential frames, the recognition performance is further improved as the number of frames to be processed increases.

As described above, in the second recognition processing method, the recognition processing is performed, for at least a part of the frames, using only the 8-bit data which is a part of data (24-bit data) in the entire frame.

### <Third recognition processing method of present technology>

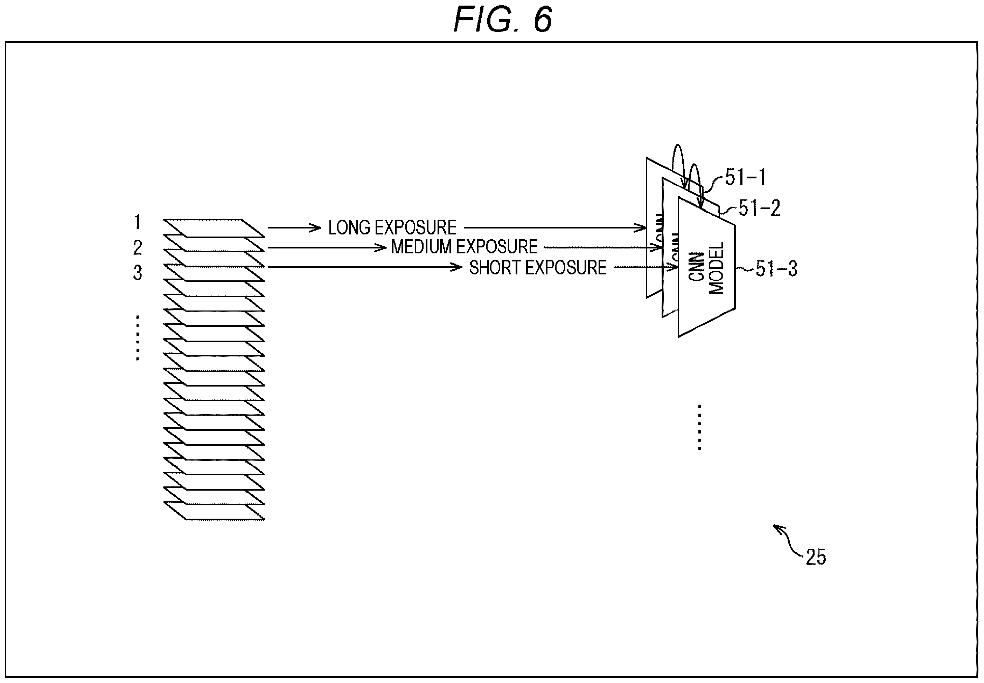

Fig. 6 is a diagram illustrating a third recognition processing method of the present technology.

In the case of Fig. 6, for example, the data storage unit 21 stores image data including 10-bit data of low exposure, 10-bit data of medium exposure, and 10-bit data of high exposure, which are obtained by different types of exposure (time and amount) obtained while changing the shutter speed for one frame. This image data is 24-bit high dynamic range (HDR) data obtained by synthesizing each 10-bit data of low exposure, medium exposure, and high exposure. Fig. 6 illustrates an example in which three types of exposure of low exposure, medium exposure, and high exposure are performed, but the third recognition processing method is also applied in a case where any number of types of exposure are performed such as two types or four types of exposure are performed.

Note that Fig. 6 illustrates a case where t = 1. This similarly applies to the following drawings.

The data acquisition unit 24 inputs, for the first frame, 10-bit data of long exposure to the CNN model 51-1.

The CNN model 51-1 performs, for the first frame, the recognition processing on the 10-bit data of long exposure, and outputs the recognition result of the first frame to the CNN model 51-2.

The data acquisition unit 24 inputs, for the second frame, the 10-bit data of medium exposure to the CNN model 51-2.

The CNN model 51-2 performs, for the second frame, the recognition processing on the 10-bit data of medium exposure with reference to the recognition result of the first frame, and outputs the recognition result of the second frame to the CNN model 51-3.

The data acquisition unit 24 inputs, for the third frame, 10-bit data of short exposure to the CNN model 51-3.

The CNN model 51-3 performs, for the third frame, t the recognition processing on the 10-bit data of medium exposure with reference to the recognition result of the second frame, and outputs the recognition result of the third frame to the CNN model 51-4.

As described above, the recognition processing for each frame is connected recurrently. In addition, since the processing is repeated for sequential frames, the recognition performance is further improved as the number of frames to be processed increases.

As described above, in the third recognition processing method, the recognition processing is performed, for at least a part of the frames, using only data obtained by a different type of exposure (for example, data of low exposure) which is a part of data (data including a plurality of pieces of data obtained by different types of exposure) in the entire frame.

Note that, in the third recognition processing method, the input order of data is not limited to the order of the data of long exposure, the data of medium exposure, and the data of short exposure. For example, the most reliable data may be input first. Further, for example, when the data of long exposure is the most reliable data, the data may be input in the order of, for example, the data of long exposure, the data of medium exposure, the data of long exposure, and the data of short exposure such that the data of long exposure is more frequently input.

### <Fourth recognition processing method of present technology>

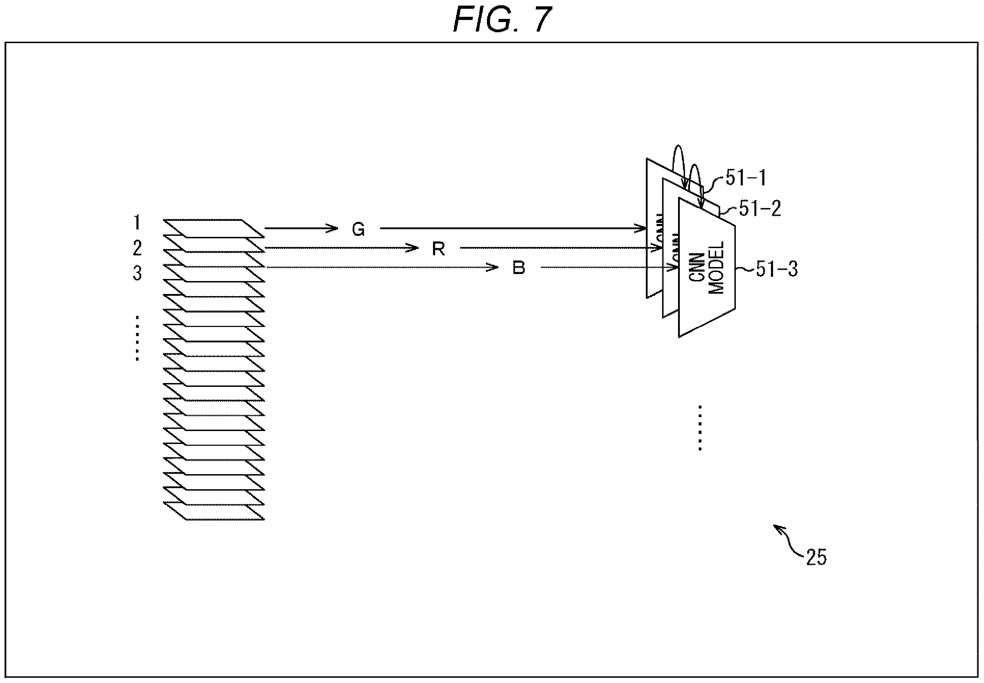

Fig. 7 is a diagram illustrating a fourth recognition processing method of the present technology.

In the case of Fig. 7, for example, image data in which each pixel of one frame includes color data of each of R, G, and B is stored in the data storage unit 21.

The data acquisition unit 24 inputs, for the first frame, color data for 1 ch out of the image data, for example, G data, to the CNN model 51-1.

The CNN model 51-1 performs, for the first frame, the recognition processing on the G data, and outputs the recognition result of the first frame to the CNN model 51-2.

The data acquisition unit 24 inputs, for the second frame, R data to the CNN model 51-2.

The CNN model 51-2 performs, for the second frame, the recognition processing on the R data with reference to the recognition result of the first frame, and outputs the recognition result of the second frame to the CNN model 51-3.

The data acquisition unit 24 inputs, for the third frame, B data to the CNN model 51-3.

The CNN model 51-3 performs, for the third frame, the recognition processing on the B data with reference to the recognition result of the second frame, and outputs the recognition result of the third frame to the CNN model 51-4.

As described above, the recognition processing for each frame is connected recurrently. In addition, since the processing is repeated for sequential frames, the recognition performance is further improved as the number of frames to be processed increases.

As described above, in the fourth recognition processing method, the recognition processing is performed, for at least a part of the frames, using only, for example, the R data, which is a part of data (RGB data) in the entire frame.

Note that, in the fourth recognition processing method, the input order of each data is not limited to the order of the G data, the R data, and the B data, but the G data is preferably input first, and either of the R data and the B data may precede.

Furthermore, color information is not limited to RGB, and may be other color spaces such as YCbCr, HSV, and YUV. In the case of YCbCr, for example, Y data is preferably input first, and either of Cb data and Cr data may precede.

### <Fifth recognition processing method of present technology>

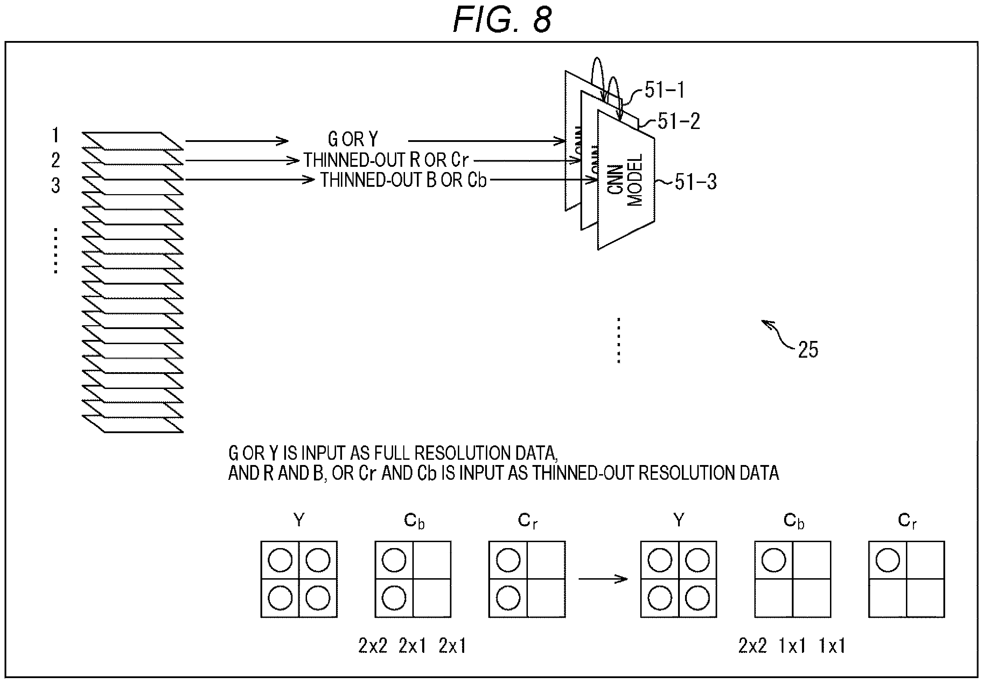

Fig. 8 is a diagram illustrating a fifth recognition processing method of the present technology.

In the case of Fig. 8, for example, image data in which each pixel of one frame includes each color data of R, G, and B, or Y, Cb, and Cr is stored in the data storage unit 21.

The data acquisition unit 24 inputs, for the first frame, for example, full-resolution G data or Y data to the CNN model 51-1.

The CNN model 51-1 performs, for the first frame, the recognition processing on the full-resolution G data or Y data, and outputs the recognition result of the first frame to the CNN model 51-2.

The data acquisition unit 24 inputs to the CNN model 51-2, for the second frame, low-resolution R data or Cb data obtained by thinning the full resolution data.

The CNN model 51-2 performs, for the second frame, the recognition processing on the R data or the Cb data with the resolution obtained by thinning out the full resolution data with reference to the recognition result of the first frame, and outputs the recognition result of the second frame to the CNN model 51-3.

The data acquisition unit 24 inputs, to the CNN model 51-3, for the third frame, low-resolution B data or Cr data obtained by thinning out the full resolution data.

The CNN model 51-3 performs, for the third frame, the recognition processing on the thinned-out low-resolution B data or Cr data with reference to the recognition result of the second frame, and outputs the recognition result of the third frame to the CNN model 51-4. These processing is repeated for sequential frames.

That is, in the case of YCbCr, usually, Y is input for 2 × 2 pixels, Cb for 2 × 1 pixels, and Cr for 2 × 1 pixels, but pixels of only Cb and Cr are thinned out (resolution is reduced) such that Y is input for 2 × 2 pixels, Cb for 1 × 1 pixel, and Cr for 1 × 1 pixel as illustrated in the lower part of Fig. 8.

As described above, the recognition processing for each frame is connected recurrently. In addition, since the processing is repeated for sequential frames, the recognition performance is further improved as the number of frames to be processed increases.

As described above, in the fifth recognition processing method, the recognition processing is performed, for at least a part of the frames, using only, for example, the low-resolution B data which is a part of data in the entire frame.

Note that, in the fifth recognition processing method, all of the color data does not need to have full resolution, and may have a resolution by thinning out the full resolution data. However, the initial frame, which is the first frame of the recognition processing, is a key frame which is a frame which is a key in the recognition processing. Thus, if the color data input as the initial frame has full resolution, the accuracy is further improved.

### <Sixth recognition processing method of present technology>

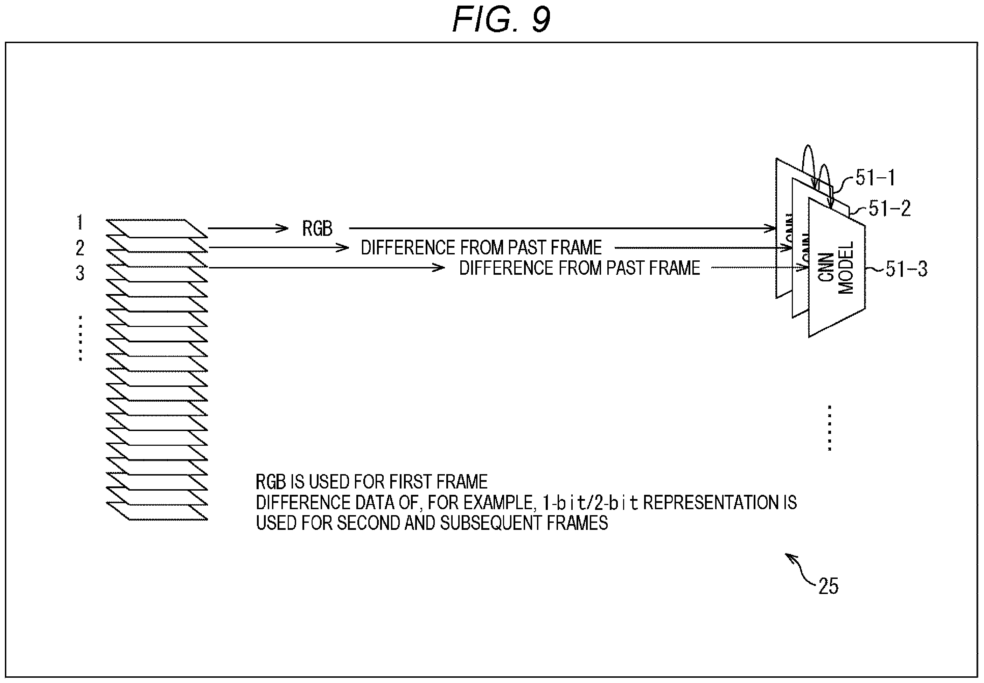

Fig. 9 is a diagram illustrating a sixth recognition processing method of the present technology.

In the case of Fig. 9, for example, image data in which each pixel of one frame includes data of each of colors R, G, and B is stored in the data storage unit 21.

The data acquisition unit 24 inputs, for the first frame, for example, RGB data to the CNN model 51-1.

The CNN model 51-1 performs, for the first frame, the recognition processing on the RGB data, and outputs the recognition result of [first frame] to the CNN model 51-2.

The data acquisition unit 24 inputs, for the second frame, difference data from a past frame (that is, the first frame) to the CNN model 51-2.

The CNN model 51-2 performs, for the second frame, the recognition processing on the difference data from the past frame (that is, the first frame) with reference to the recognition result of the first frame, and outputs the recognition result of the second frame to the CNN model 51-3.

The data acquisition unit 24 inputs, for the third frame, difference data from a past frame (that is, the second frame) to the CNN model 51-3.

The CNN model 51-3 performs, for the third frame, the recognition processing on the difference data from the past frame (that is, the second frame) with reference to the recognition result of the second frame, and outputs the recognition result of the third frame to the CNN model 51-4.

As described above, the recognition processing for each frame is connected recurrently. In addition, since the processing is repeated for sequential frames, the recognition performance is further improved as the number of frames to be processed increases.

As described above, in the sixth recognition processing method, the recognition processing is performed, for at least a part of the frames, using only the difference data from the past frame which is a part of data in the entire frame.

### <Seventh recognition processing method of present technology>

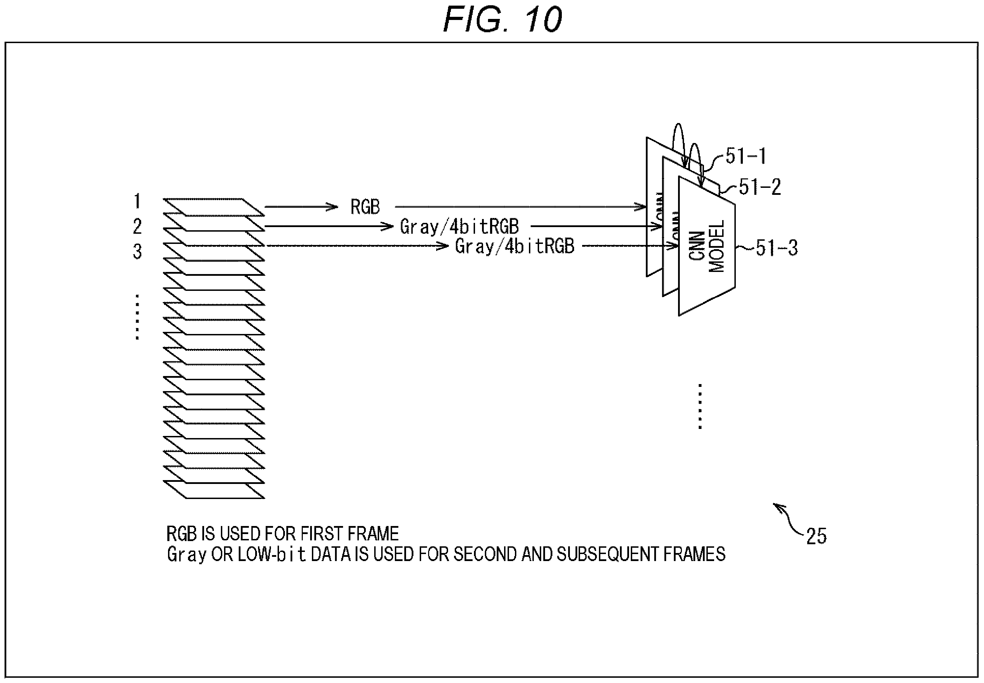

Fig. 10 is a diagram illustrating a seventh recognition processing method of the present technology.

In the case of Fig. 10, for example, image data in which each pixel of one frame includes data of each of colors R, G, and B is stored in the data storage unit 21.

The data acquisition unit 24 inputs, for the first frame, for example, RGB data to the CNN model 51-1.

The CNN model 51-1 performs, for the first frame, the recognition processing on the RGB data, and outputs the recognition result of the first frame to the CNN model 51-2.

The data acquisition unit 24 inputs, for the second frame, Gray data or low-bit (for example, in a case where 8-bit data is stored, 4-bit) RGB data to the CNN model 51-2. Note that, in a case where the original image data is 8-bit data, the low-bit data is, for example, 4-bit data or the like.

The CNN model 51-2 performs, for the second frame, the recognition processing on the Gray data or the 4-bit RGB data with reference to the recognition result of the first frame, and outputs the recognition result of the second frame to the CNN model 51-3.

The data acquisition unit 24 inputs, for the third frame, the Gray data or the 4-bit RGB data to the CNN model 51-3.

The CNN model 51-3 performs, for the third frame, the recognition processing on the Gray data or the 4-bit RGB data with reference to the recognition result of the second frame, and outputs the recognition result of the third frame to the CNN model 51-4.

As described above, the recognition processing for each frame is connected recurrently. In addition, since the processing is repeated for sequential frames, the recognition performance is further improved as the number of frames to be processed increases.

As described above, in the seventh recognition processing method, the recognition processing is performed, for at least a part of the frames, using only the Gray data or the low-bit data which is a part of data (RGB data) in the entire frame.

### <Eighth recognition processing method of present technology>

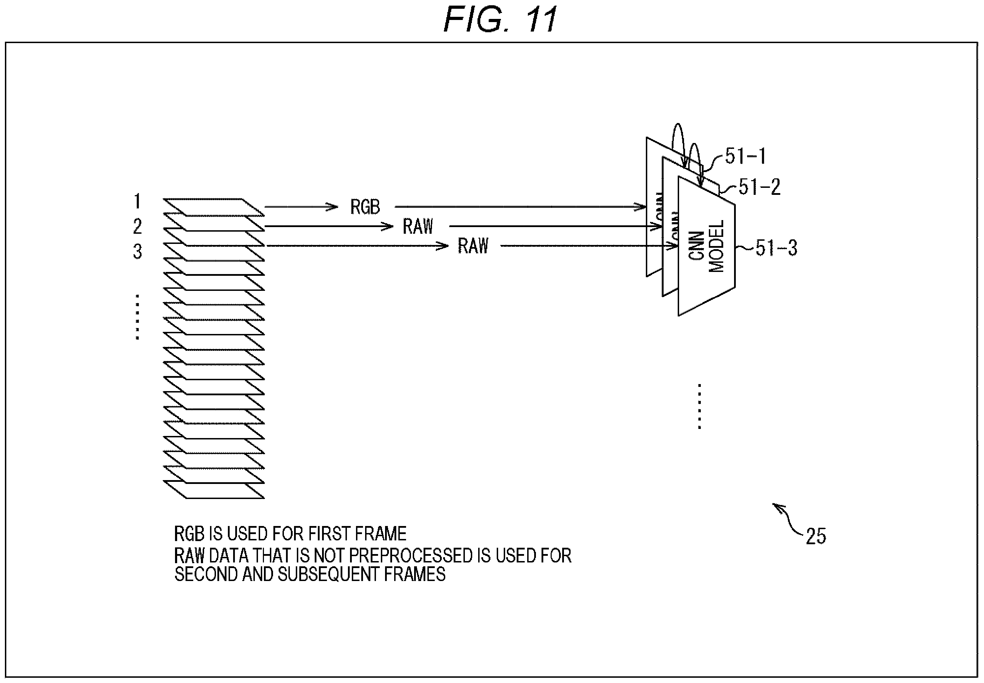

Fig. 11 is a diagram illustrating an eighth recognition processing method of the present technology.

In the case of Fig. 11, for example, image data in which each pixel of one frame includes RAW data which is not preprocessed and which is converted into RGB data by signal processing by the data acquisition unit 24 or the like, is stored in the data storage unit 21.

The data acquisition unit 24 inputs, for the first frame, for example, the RGB data converted by the signal processing to the CNN model 51-1.

The CNN model 51-1 performs, for the first frame, the recognition processing on the RGB data, and outputs the recognition result of the first frame to the CNN model 51-2.

The data acquisition unit 24 inputs, for the second frame, the RAW data to the CNN model 51-2.

The CNN model 51-2 performs, for the second frame, the recognition processing on the RAW data with reference to the recognition result of the first frame, and outputs the recognition result of the second frame to the CNN model 51-3.

The data acquisition unit 24 inputs, for the third frame, the RAW data to the CNN model 51-3.

The CNN model 51-3 performs, for the third frame, the recognition processing on the RAW data with reference to the recognition result of the second frame, and outputs the recognition result of the third frame to the CNN model 51-4.

As described above, the recognition processing for each frame is connected recurrently. In addition, since the processing is repeated for sequential frames, the recognition performance is further improved as the number of frames to be processed increases.

As described above, in the eighth recognition processing method, the recognition processing is performed, for at least a part of the frames, using only the RAW data which is a part of information of data in the entire frame and information before the signal processing is performed on the data. Since the RAW data does not require signal processing such as ISP processing, and the processing amount is reduced as compared with the RGB data, as a result, the processing cost can be reduced.

Note that, as the eighth recognition processing method, an example in which the first frame is the RGB data and the second and subsequent frames are the RAW data has been described. However, the first frame may be the RAW data and the second and subsequent frames may be the RGB data. In consideration of the amount of information, since the RAW data has a larger amount of information than the 8-bit or 4-bit RGB data, by doing so, the transfer to the recognition unit 25 can be performed quickly.

Furthermore, in the first to eighth recognition processing methods described above, the network in the CNN model 51 for the second and subsequent frames can be reduced in size as described in "Lumin Xu, Yingda Guan, Sheng Jin, Wentao Liu, Chen Qian, Ping Luo, Wanli Ouyang, Xiaogang Wang, "ViPNAS: Efficient Video Pose Estimation via Neural Architecture Search", Fri, 21 May 2021, [searched on January 15, 2022], Internet <URL: https://arxiv.org/abs/2105.10154>" (hereinafter, referred to as Cited Document 1). That is, also in the first to eighth recognition processing methods, the CNN model 51 in the second and subsequent frames may be configured to be smaller than the CNN model 51 in the first frame which is the initial frame.

### <Processing of signal processing apparatus>

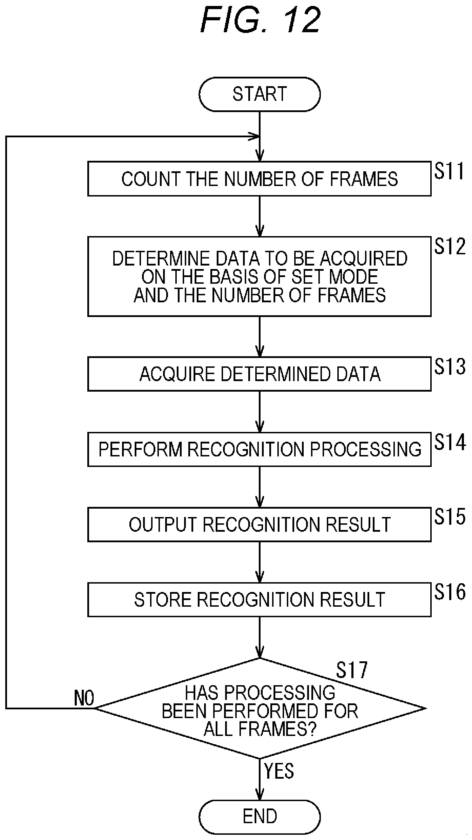

Fig. 12 is a flowchart illustrating processing of the signal processing apparatus 11 in Fig. 1.

In step S11, the frame counting unit 22 reads the image data from the data storage unit 21 for each frame, and counts the number of frames indicating the position of the read frame from the initial frame. The frame counting unit 22 outputs the read frame and the counted number of frames to the mode setting unit 23.

In the mode setting unit 23, a processing mode is set indicating what kind of data (part or all) the recognition unit 25 uses to perform the recognition processing, that is, which of the first to eighth recognition processing methods is performed.

In step S12, on the basis of the set processing mode and the number of frames supplied from the frame counting unit 22, the mode setting unit 23 determines the position of the frame supplied from the frame counting unit 22 and what kind of data (part or all) is to be acquired from the frame. The mode setting unit 23 outputs, to the data acquisition unit 24, information regarding the determined data and the frame supplied from the frame counting unit 22.

In step S13, the data acquisition unit 24 performs signal processing as necessary on the frame with reference to the information regarding the data supplied from the mode setting unit 23, acquires data of the kind determined by the mode setting unit 23, and outputs the acquired data to the recognition unit 25. For example, the G data, the R data, and the B data are acquired for the first frame, the second frame, and the third frame, respectively, and output to the recognition unit 25.

In step S14, the recognition unit 25 uses the data supplied from the data acquisition unit 24 to perform recognition processing by a recognition processing method corresponding to the set processing mode among the first recognition processing method to eighth recognition processing method described above.

In step S15, the result output unit 26 outputs the recognition result by the one or more CNN models 51 to the result storage unit 27.

In step S16, the result storage unit 27 stores the recognition result supplied from the result output unit 26.

In step S17, the frame counting unit 22 checks the number of frames being counted, and determines whether or not processing has been performed for all the frames. In a case where it is determined in step S17 that processing has not been performed for all the frames, the processing returns to step S11, and the processing in step S11 and subsequent steps is repeated.

In a case where it is determined in step S17 that processing has been performed for all the frames, the processing of the signal processing apparatus 11 ends.

### <Effects of first to eighth recognition processing methods>

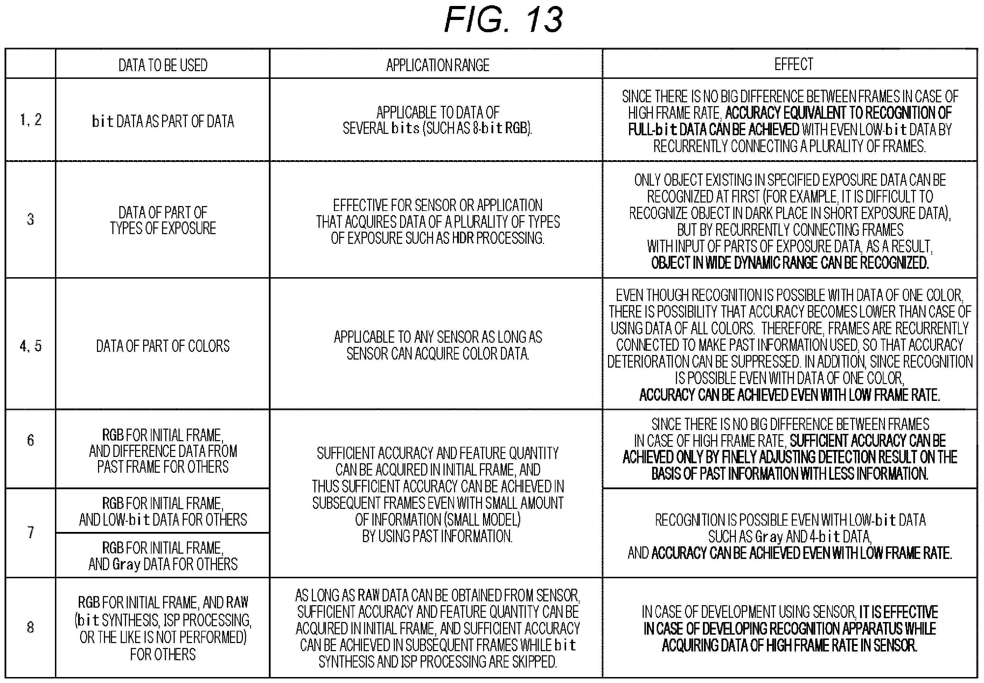

Fig. 13 is a diagram illustrating each effect of the first to eighth recognition processing methods.

In Fig. 13, the recognition processing method, data to be used, an application range, and an effect are illustrated from the left.

In the first and second recognition processing methods, the data to be used is a part of bits of data. The first and second recognition processing methods are applicable to several bits of data (8-bit RGB).

According to the first and second recognition processing methods, since there is no big difference between frames in the case of a high frame rate, recurrently connecting the recognition processing of a plurality of frames can provide an accuracy equivalent to the recognition of full-bit data even using low-bit data.

In the third recognition processing method, the data to be used is a part of exposure data of data including a plurality of pieces of exposure data of different exposure types. The third recognition processing method is effective for a sensor or an application that acquires a plurality pieces of exposure data used for, for example, the HDR processing.

According to the third recognition processing method, only an object existing (appearing) in a specified piece of exposure data can be recognized at first (for example, it is difficult to recognize an object in a dark place in short exposure data), but by recurrently connecting the recognition processing with input of a plurality pieces of exposure data, as a result, an object in a wide dynamic range can be recognized.

In the fourth and fifth recognition processing methods, the data to be used is a data piece of at least a part of colors. Note that the data to be used in the fifth recognition processing method is also a part of data obtained by thinning out the full-resolution data, that is, low-resolution data. The fourth and fifth recognition processing methods are applicable to any sensor as long as the sensor can acquire color data.

According to the fourth and fifth recognition processing methods, even though the recognition is possible using data of one color, there is a possibility that the accuracy is lower than the case of using data of all colors. Therefore, the recognition processing connected recurrently so that the past information (recognition result) can be used, enabling suppress of accuracy deterioration. In addition, since the recognition is possible even with data of one color, the accuracy can be achieved even with a low frame rate.

In the sixth recognition processing method, the data to be used is RGB data for the initial frame and difference data from the past frame for the other frames. In the sixth recognition processing method, sufficient accuracy and feature quantity can be acquired in the initial frame, and thus sufficient accuracy can be achieved in subsequent frames even with a small amount of information (small CNN model) by using the past information as described in Cited Document 1 above.

According to the sixth recognition processing method, since there is no big difference between frames in a case of a high frame rate, sufficient accuracy can be expected only by finely adjusting a recognition result on the basis of past information with less information.

In the seventh recognition processing method, the data to be used is RGB data for the initial frame and low-bit data for the other frames, or is RGB data for the initial frame and Gray data for the other frames. In the seventh recognition processing method, sufficient accuracy and feature quantity can be acquired in the initial frame, and thus sufficient accuracy can be achieved in subsequent frames even with a small amount of information (small model) by using the past information similarly to the sixth recognition processing method.

According to the seventh recognition processing method, the recognition is possible even with the low-bit data such as Gray data and 4-bit data, and accuracy can be expected even with a low frame rate.

In the eighth recognition processing method, the data to be used is RGB data for the initial frame and RAW data for the other frames. In the eighth recognition processing method, in a case where the RAW data can be acquired from a sensor, sufficient accuracy and feature quantity can be acquired in the initial frame of the RGB data, sufficient accuracy can be achieved in subsequent frames even though Bit synthesis and ISP processing are skipped and the RAW data is left as it is.

According to the eighth recognition processing method, is effective in a case of developing a recognition apparatus while acquiring data of a high frame rate in a sensor because the RAW data cannot be easily acquired in normal processing.

Note that, also in the first to fifth recognition processing methods, as in the sixth to eighth recognition processing methods, it is also possible to perform the recognition processing using full data for the initial frame, and perform the recognition processing using data corresponding to each recognition processing method for the following frames.

### <2. Second Embodiment (First Additional Configuration of Reset Determination Unit)>

### <Second configuration example of signal processing apparatus>

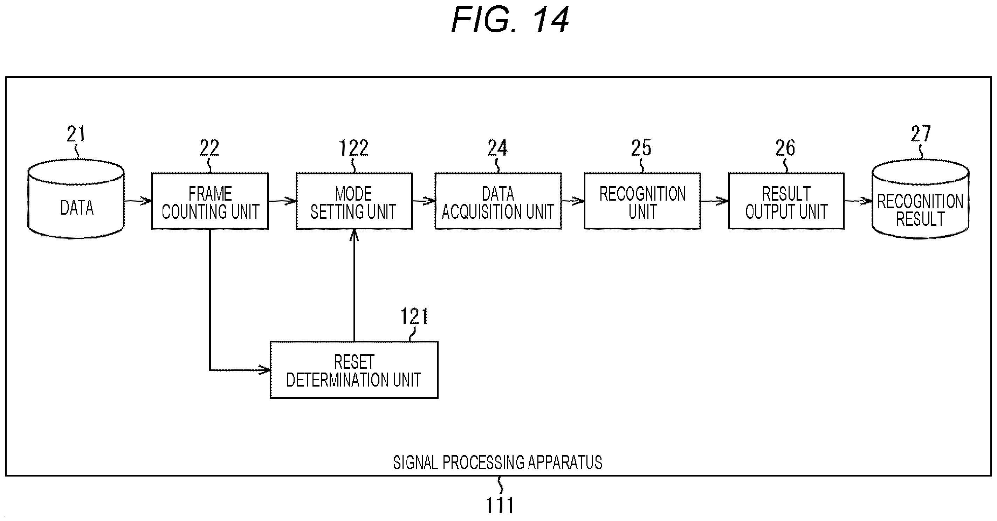

Fig. 14 is a block diagram illustrating a second configuration example of a signal processing apparatus.

A signal processing apparatus 111 of Fig. 14 is different from the signal processing apparatus 11 of Fig. 1 in that a reset determination unit 121 is added and the mode setting unit 23 is replaced with a mode setting unit 122. In Fig. 14, units corresponding to those in Fig. 1 are denoted by the same reference numerals.

In the reset determination unit 121, a predetermined number of frames (or time) at which reset is performed is set in advance in accordance with a user's instruction from an operation input unit or the like (not illustrated). With reference to the number of frames counted by the frame counting unit 22, the reset determination unit 121 determines whether or not it has reached the set predetermined number of frames. When determining that the set predetermined number of frames has been reached, the reset determination unit 121 resets the number of frames and notifies the mode setting unit 122 to process the next frame as an initial frame.

On the basis of the set processing mode, the number of frames supplied from the frame counting unit 22, and the reset notification from the reset determination unit 121, the mode setting unit 122 determines the position of the frame supplied from the frame counting unit 22 and what kind of data (part or all) is to be acquired from the frame. The mode setting unit 122 outputs, to a data acquisition unit 24, determined information regarding data and the frame supplied from the frame counting unit 22.

### <First reset method>

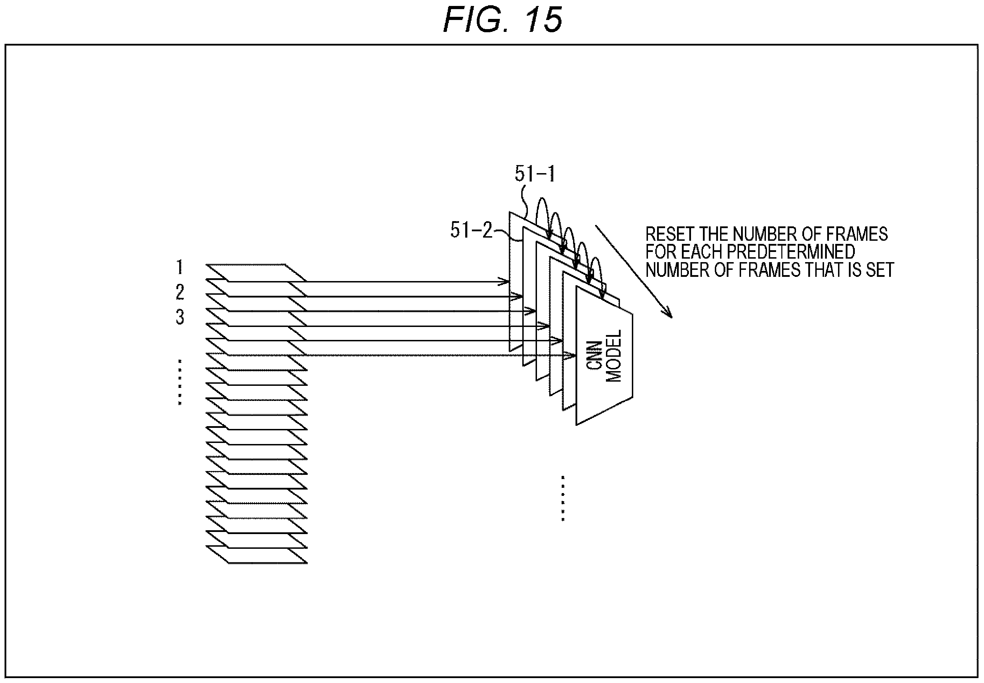

Fig. 15 is a diagram illustrating a first reset determination method.

For example, in the case of the sixth recognition processing method described above with reference to Fig. 9, the RGB data is used for the first frame, and the difference data is used for the second and subsequent frames. In such a case, it is necessary to determine a timing to reset, that is, a timing to stop using the difference data and input the RGB data again.

Therefore, with reference to the number of frames counted by the frame counting unit 22, the reset determination unit 121 resets the number of frames for each predetermined number of frames set in advance and notifies the mode setting unit 122 to process the next frame as an initial frame, as illustrated in Fig. 15.

This configuration can make the RGB data used for each predetermined number of frames, and the difference data used for the other frames.

Note that although the sixth recognition processing method has been used as an example for Fig. 15, it similarly applies to the seventh and eighth recognition processing methods.

### <Processing of signal processing apparatus>

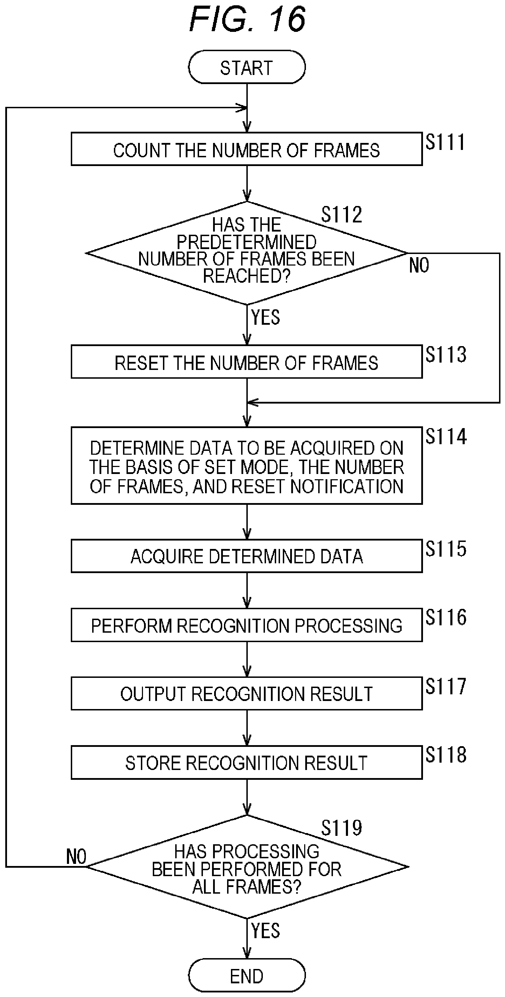

Fig. 16 is a flowchart illustrating processing of the signal processing apparatus 111 in Fig. 14.

In step S111, the frame counting unit 22 reads the image data from the data storage unit 21 for each frame, and counts the number of frames indicating the position of the read frame from the initial frame. The frame counting unit 22 outputs the read frame and the counted number of frames to the mode setting unit 122.

In step S112, with reference to the number of frames counted by the frame counting unit 22, the reset determination unit 121 determines whether or not it has reached the set predetermined number of frames.

In a case where it is determined in step S112 that the set predetermined number of frames has been reached, the processing proceeds to step S113.

In step S113, the reset determination unit 121 resets the number of frames and notifies the mode setting unit 122 to process the next frame as an initial frame.

In a case where it is determined in step S112 that the set predetermined number of frames has not been reached, the processing in step S113 is skipped, and the processing proceeds to step S114.

In the mode setting unit 122, a processing mode is set indicating what kind of data the recognition unit 25 uses to perform the recognition processing, that is, which of the first to eighth recognition processing methods is performed.

In step S114, on the basis of the set processing mode, the number of frames supplied from the frame counting unit 22, and the reset notification from the reset determination unit 161 in a case where such notification is received, the mode setting unit 122 determines the position of the frame supplied from the frame counting unit 22 and what kind of data is to be acquired from the frame. The mode setting unit 122 outputs, to a data acquisition unit 24, determined information regarding data and the frame supplied from the frame counting unit 22.

The processing in steps S115 to S119 is similar to the processing in steps S13 to S17 of Fig. 12, and thus the description thereof will be omitted.

As described above, the number of frames is reset every predetermined number of frames (time), data corresponding to the initial frame is acquired, and the recognition processing is performed. As a result, it is possible to prevent deterioration of the accuracy of the recognition result while reducing cost of the recognition processing using a plurality of frames.

### <3. Third Embodiment (Second Additional Configuration of Reset Determination Unit)>

### <Third configuration example of signal processing apparatus>

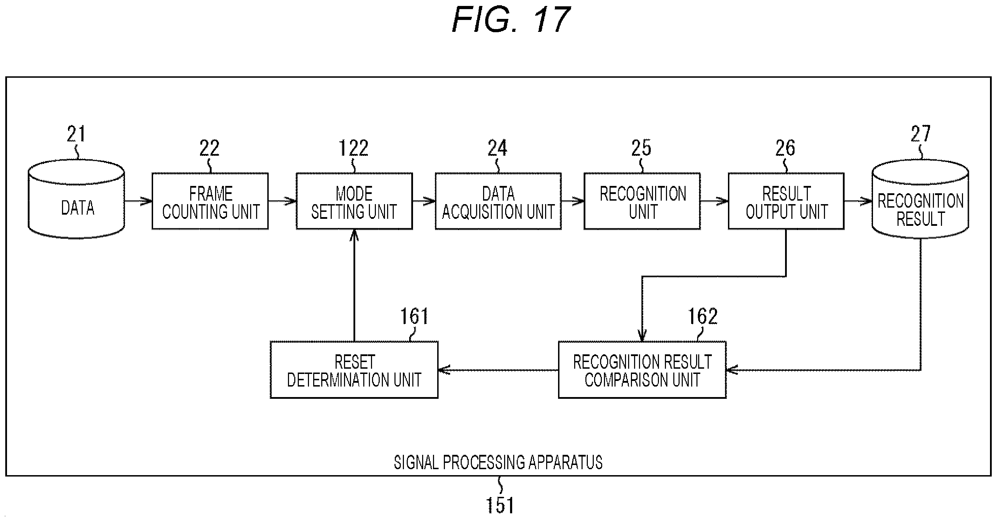

Fig. 17 is a block diagram illustrating a third configuration example of a signal processing apparatus.

A signal processing apparatus 151 of Fig. 17 is different from the signal processing apparatus 111 of Fig. 14 in that the reset determination unit 121 is replaced with a reset determination unit 161 and a recognition result comparison unit 162 is added. In Fig. 17, units corresponding to those in Figs. 1 and 14 are denoted by corresponding reference numerals.

With reference to the comparison result supplied from the recognition result comparison unit 162, the reset determination unit 161 determines, for example, whether or not the recognition result has greatly changed. When determining that the recognition result has greatly changed, the reset determination unit 161 resets the number of frames and notifies the mode setting unit 122 to process the next frame as an initial frame.

The recognition result comparison unit 162 compares the past recognition result stored in the result storage unit 27 with the current recognition result obtained by smoothing the current recognition results for several frames output from the result output unit 26. The recognition result comparison unit 162 outputs the comparison result to the reset determination unit 161.

### <Second reset method>

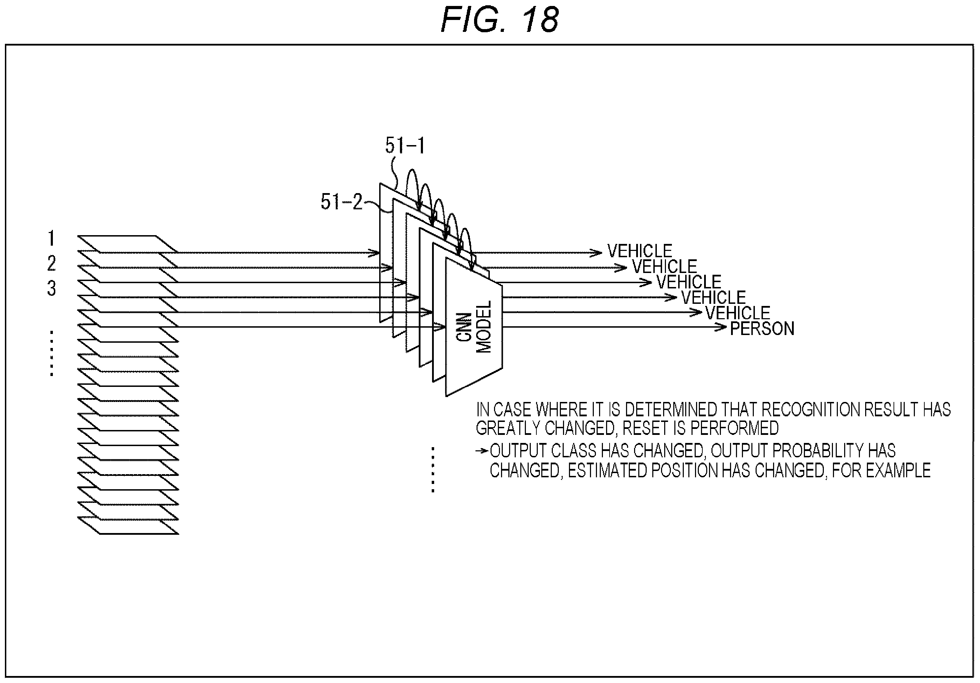

Fig. 18 is a diagram illustrating a second reset determination method.

As described above with reference to Fig. 15, for example, in the case of the sixth recognition processing method, it is necessary to determine a timing to reset, that is, a timing to stop using the difference data and input the RGB data again.

Therefore, the recognition result comparison unit 162 compares the past recognition result stored in the result storage unit 27 with the current recognition result obtained by smoothing the current recognition results for several frames output from the result output unit 26. The recognition result comparison unit 162 outputs the comparison result to the reset determination unit 161. Note that the current recognition result for several frames may not be smoothed, and the past recognition result may be compared with the result of each of the frames.

With reference to the comparison result supplied from the recognition result comparison unit 162, the reset determination unit 121 determines whether or not the recognition result (for example, an output class, an output probability, an estimated position, and the like) has greatly changed.

For example, in a case where a vehicle is recognized in the first to fifth frames, and a person is recognized in the sixth frame as illustrated in Fig. 18, the reset determination unit 161 determines that the recognition result has greatly changed, resets the number of frames, and notifies the mode setting unit 122 to process a frame next to the frame determined to have greatly changed as an initial frame.

As a result, the frame next to a frame for which the recognition result has been greatly changed can be set as the initial frame and the RGB data can be used therefor, and the difference data can be used for the other frames.

Note that although the sixth recognition processing method has been used as an example for Fig. 18, it similarly applies to the seventh and eighth recognition processing methods.

### <Processing of signal processing apparatus>

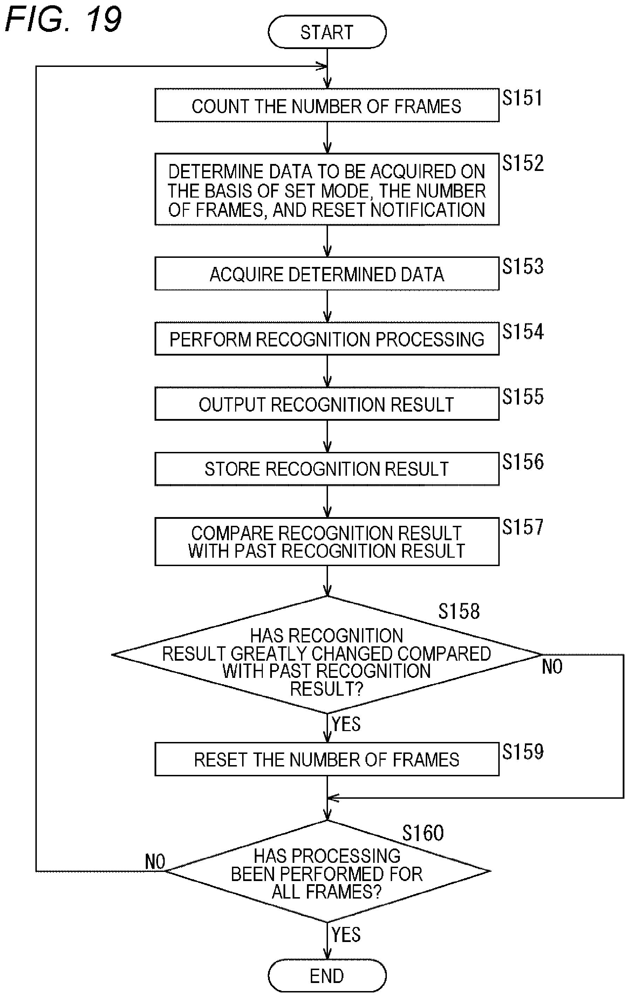

Fig. 19 is a flowchart illustrating processing of the signal processing apparatus 151 in Fig. 17.

In step S151, the frame counting unit 22 reads the image data from the data storage unit 21 for each frame, and counts the number of frames indicating the position of the read frame from the initial frame. The frame counting unit 22 outputs the read frame and the counted number of frames to the mode setting unit 122.

In the mode setting unit 122, a processing mode is set indicating what kind of data the recognition unit 25 uses to perform the recognition processing, that is, which of the first to eighth recognition processing methods is used to perform the recognition processing.

In step S152, on the basis of the set processing mode, the number of frames supplied from the frame counting unit 22, and the reset notification from the reset determination unit 161 in a case where such notification is received, the mode setting unit 122 determines the position of the frame supplied from the frame counting unit 22 and what kind of data is to be acquired from the frame. The mode setting unit 122 outputs, to a data acquisition unit 24, determined information regarding data and the frame supplied from the frame counting unit 22.

The processing in steps S153 to S156 is similar to the processing in steps S13 to S16 of Fig. 12, and thus the description thereof will be omitted.

In step S157, the recognition result comparison unit 162 compares the past recognition result stored in the result storage unit 27 with the current recognition result obtained by smoothing the current recognition results for several frames output from the result output unit 26. The recognition result comparison unit 162 outputs the comparison result to the reset determination unit 161.

In step S158, with reference to the comparison result supplied from the recognition result comparison unit 162, the reset determination unit 161 determines whether or not the recognition result has greatly changed. In a case where it is determined in step S158 that the recognition result has greatly changed, the processing proceeds to step S159.

In step S159, the reset determination unit 161 resets the number of frames and notifies the mode setting unit 122 to process the next frame as an initial frame.

In a case where it is determined in step S158 that the recognition result has not greatly changed, the processing in step S159 is skipped, and the processing proceeds to step S160.

In step S160, the frame counting unit 22 checks the number of frames being counted, and determines whether or not processing has been performed for all the frames. In a case where it is determined in step S160 that not all the frames have ended, the processing returns to step S151, and the processing in step S151 and subsequent steps is repeated.

In a case where it is determined in step S160 that processing has been performed for all the frames, the processing of the signal processing apparatus 11 ends.

As described above, when the current recognition result greatly changes from the past recognition result, the number of frames is reset, data corresponding to the initial frame is acquired, and the recognition processing is performed. As a result, it is possible to prevent deterioration of the accuracy of the recognition result while reducing cost of the recognition processing using a plurality of frames.

### <4. Fourth Embodiment (Third Additional Configuration of Reset Determination Unit)>

### <Fourth configuration example of signal processing apparatus>

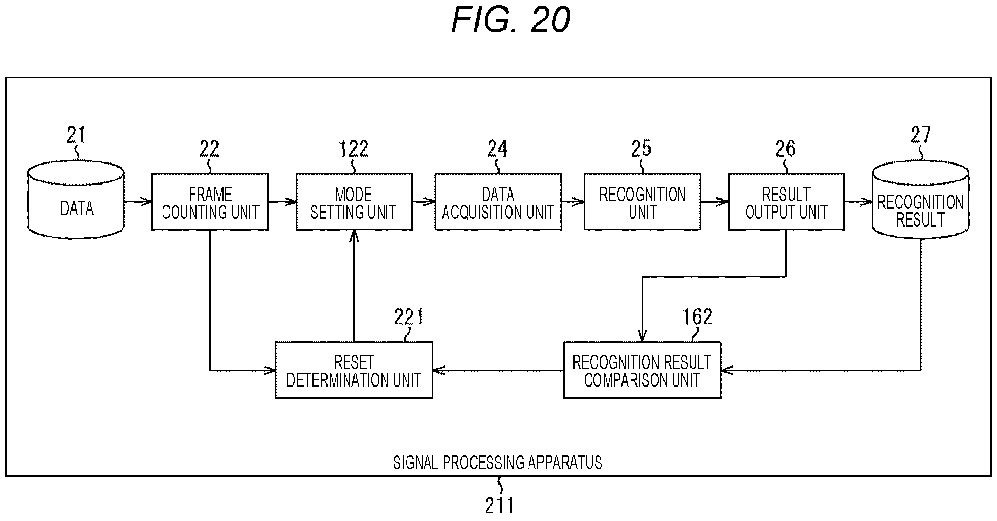

Fig. 20 is a block diagram illustrating a fourth configuration example of a signal processing apparatus.

A signal processing apparatus 201 of Fig. 20 is different from the signal processing apparatus 151 of Fig. 17 in that the reset determination unit 161 is replaced with a reset determination unit 221. In Fig. 20, units corresponding to those in Figs. 1 and 17 are denoted by the same reference numerals.

With reference to the number of frames counted by the frame counting unit 22, the reset determination unit 221 determines whether or not it has reached the set predetermined number of frames. When determining that the set predetermined number of frames has been reached, the reset determination unit 221 resets the number of frames and notifies the mode setting unit 122 to process the next frame as an initial frame.

In addition, with reference to the comparison result supplied from the recognition result comparison unit 162, the reset determination unit 221 determines whether or not the recognition result has greatly changed. When determining that the recognition result has greatly changed, the reset determination unit 221 resets the number of frames and notifies the mode setting unit 122 to process the next frame as an initial frame.

That is, the signal processing apparatus 201 of Fig. 20 has a configuration formed by combining the configuration of the signal processing apparatus 111 and the configuration of the signal processing apparatus 151. In the signal processing apparatus 201, the number of frames is reset by using the first reset method and the second reset method, data corresponding to the initial frame is acquired, and the recognition processing is performed.

As a result, the reset timing is not missed, so that it is possible to suppress deterioration of the accuracy of the recognition processing while reducing cost of the recognition processing using a plurality of frames.

### <5. Others>

### <Effects of present technology>

In the present technology, when performing recognition processing for each frame of a plurality of frames, the recognition processing is performed, for at least a part of the frames, using only a part of data in the entire frame. As a result, cost reduction can be realized in recognition processing using a plurality of frames.

Note that, in the above description, the example of the CNN has been described as a method used for recognition. However, the present technology can be applied to a machine learning method other than the CNN (a classical method such as SVM, a recurrent neural network (RNN), a long short term memory (LSTM), a vision transformer, and a method other than the CNN to be found in the future.

### <Configuration example of computer>

The series of processing described above can be executed by hardware or by software. In a case where the series of processing is executed by software, a program constituting the software is installed on a computer built into dedicated hardware, a general-purpose personal computer, or the like from a program recording medium.

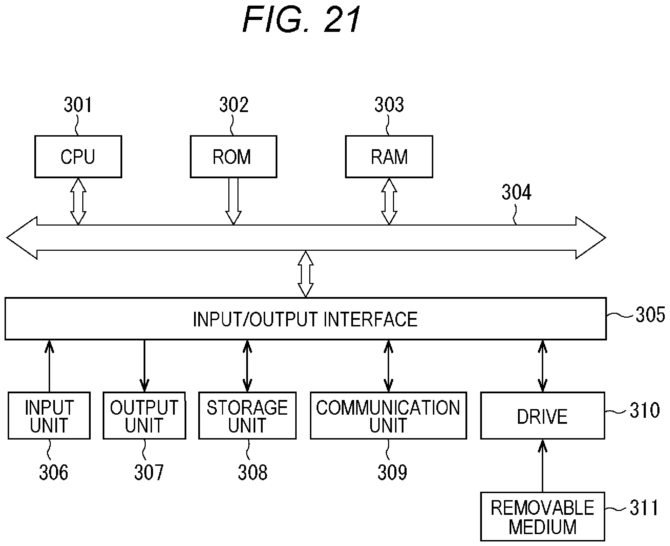

Fig. 21 is a block diagram illustrating a configuration example of the hardware of the computer that executes the above-described series of processing by the program.

A central processing unit (CPU) 301, a read only memory (ROM) 302, and a random access memory (RAM) 303 are mutually connected by a bus 304.

Moreover, an input/output interface 305 is connected to the bus 304. To the input/output interface 305, an input unit 306 including a keyboard, a mouse, and the like, and an output unit 307 including a display, a speaker, and the like are connected. Furthermore, the input/output interface 305 is connected to a storage unit 308 including a hard disk, a non-volatile memory, and the like, a communication unit 309 including a network interface and the like, and a drive 310 that drives a removable medium 311.

In the computer configured as described above, for example, the CPU 301 loads a program stored in the storage unit 308 into the RAM 303 via the input/output interface 305 and the bus 304, and executes the program to perform the above-described series of processing.

The program to be executed by the CPU 301 is provided, for example, by being recorded on the removable medium 311 or via a wired or wireless transmission medium such as a local area network, the Internet, or digital broadcasting, and is installed in the storage unit 308.

Note that, the program to be executed by the computer may be a program in which processing is performed in time series in the order described herein, or may be a program in which processing is performed in parallel or at necessary timing such as when a call is made, for example.

Note that, in the present description, a system means an assembly of a plurality of components (such as apparatuses and modules (parts)), and it does not matter whether or not all the components are in the same housing. Therefore, a plurality of apparatuses each housed in separate housings and connected via a network and one apparatus in which a plurality of modules is housed in one housing are both systems.

Furthermore, the effects described in the present description are merely examples and not restrictive, and there may also be other effects. For example, the recognition processing described above can be performed by a graphics processing unit (GPU).

Embodiments of the present technology are not limited to the above-described embodiments, and various modifications may be made without departing from the gist of the present technology.

For example, the present technology may be configured as cloud computing in which one function is shared by a plurality of apparatuses via a network and processing is executed in cooperation.

Furthermore, each step described in the flowchart described above can be performed by one apparatus or by a plurality of apparatuses in a shared manner.

Moreover, in a case where a plurality of processing steps is included in one step, the plurality of processing steps included in the one step can be executed by one apparatus or shared and executed by the plurality of apparatuses.

### <Examples of configuration combinations>

The present technology can also be configured as follows.
(1) A signal processing apparatus including
   a recognition unit that performs, when performing recognition processing for each frame of a plurality of frames, the recognition processing, for at least a part of the frames, using only a part of data in an entire frame.
(2) The signal processing apparatus according to (1), in which
   the recognition unit performs the recognition processing using all of the data for an initial frame among the plurality of frames.
(3) The signal processing apparatus according to (2), further including
   a reset determination unit that resets a number of frames counted from the initial frame when a predetermined condition is satisfied, in which
   upon reset by the reset determination unit, the recognition unit performs the recognition processing with a next frame as the initial frame.
(4) The signal processing apparatus according to (3), in which
   the predetermined condition is that the number of frames exceeds a predetermined number.
(5) The signal processing apparatus according to (3), in which
   the predetermined condition is that a magnitude of a change between a past recognition result and a current recognition result exceeds a threshold.
(6) The signal processing apparatus according to any one of (1) to (5), in which
   the recognition unit performs the recognition processing using only a part of bits of the data.
(7) The signal processing apparatus according to any one of (1) to (6), in which
   the recognition unit performs the recognition processing using data representing the data with a part of bits of the data.
(8) The signal processing apparatus according to any one of (1) to (7), in which
   the recognition unit performs the recognition processing using only a part of colors of the data.
(9) The signal processing apparatus according to (8), in which
   the part of colors is any one of Y, Cb, Cr, R, G, B, and GRAY.
(10) The signal processing apparatus according to any one of (1) to (6), in which
   the recognition unit performs the recognition processing using only a part of pixels of the data.
(11) The signal processing apparatus according to (10), in which
   the recognition unit performs the recognition processing using only pixels obtained by thinning out the data.
(12) The signal processing apparatus according to any one of (1) to (6), in which
   the recognition unit performs the recognition processing using only a part of information of the data, the information including data before signal processing is performed thereon.
(13) The signal processing apparatus according to any one of (1) to (6), in which
   the recognition unit performs the recognition processing using a part of the data including a plurality of pieces of data obtained by different types of exposure.
(14) The signal processing apparatus according to (13), in which

   the part is any one of high exposure data, medium exposure data, and low exposure data.
(15) The signal processing apparatus according to any one of (1) to (6), in which
   the recognition unit performs the recognition processing using only a difference, which is a part of the data, between the frame and a past frame captured before the frame.
(16) The signal processing apparatus according to any one of (1) to (15), in which
   the recognition unit uses a recognition result of each frame as an input for a next frame to recurrently connect recognition processing for each frame.
(17) The signal processing apparatus according to (16), in which
   the recognition unit performs the recognition processing, for second and subsequent frames among the plurality of frames, using a learning model smaller than a learning model used for an initial frame.
(18) The signal processing apparatus according to any one of (1) to (17), in which
   the recognition unit performs the recognition processing using a convolutional neural network (CNN).
(19) A signal processing method performed by a signal processing apparatus, including
   performing, when performing recognition processing for each frame of a plurality of frames, the recognition processing, for at least a part of the frames, using only a part of data in an entire frame.
(20) A program that causes a computer to function as
   a recognition unit that performs, when performing recognition processing for each frame of a plurality of frames, the recognition processing, for at least a part of the frames, using only a part of data in an entire frame.

### REFERENCE SIGNS LIST

- 11: Signal processing apparatus
- 21: Data storage unit
- 22: Frame counting unit
- 23: Mode setting unit
- 24: Data acquisition unit
- 25: Recognition unit
- 26: Result output unit
- 27: Result storage unit
- 111: Signal processing apparatus
- 121: Reset determination unit
- 122: Mode setting unit
- 151: Signal processing apparatus
- 161: Reset determination unit
- 162: Recognition result comparison unit
- 211: Signal processing apparatus
- 221: Reset determination unit

## Claims

1. A signal processing apparatus comprising
a recognition unit that performs, when performing recognition processing for each frame of a plurality of frames, the recognition processing, for at least a part of the frames, using only a part of data in an entire frame.

2. The signal processing apparatus according to claim 1, wherein
the recognition unit performs the recognition processing using all of the data for an initial frame among the plurality of frames.

3. The signal processing apparatus according to claim 2, further comprising
a reset determination unit that resets a number of frames counted from the initial frame when a predetermined condition is satisfied, wherein
upon reset by the reset determination unit, the recognition unit performs the recognition processing with a next frame as the initial frame.

4. The signal processing apparatus according to claim 3, wherein
the predetermined condition is that the number of frames exceeds a predetermined number.

5. The signal processing apparatus according to claim 3, wherein
the predetermined condition is that a magnitude of a change between a past recognition result and a current recognition result exceeds a threshold.

6. The signal processing apparatus according to claim 1, wherein
the recognition unit performs the recognition processing using only a part of bits of the data.

7. The signal processing apparatus according to claim 6, wherein
the recognition unit performs the recognition processing using data representing the data with a part of bits of the data.

8. The signal processing apparatus according to claim 1, wherein
the recognition unit performs the recognition processing using only a part of colors of the data.

9. The signal processing apparatus according to claim 8, wherein
the part of colors is any one of Y, Cb, Cr, R, G, B, and GRAY.

10. The signal processing apparatus according to claim 1, wherein
the recognition unit performs the recognition processing using only a part of pixels of the data.

11. The signal processing apparatus according to claim 10, wherein
the recognition unit performs the recognition processing using only pixels obtained by thinning out the data.

12. The signal processing apparatus according to claim 1, wherein
the recognition unit performs the recognition processing using only a part of information of the data, the information including data before signal processing is performed thereon.

13. The signal processing apparatus according to claim 1, wherein
the recognition unit performs the recognition processing using a part of the data including a plurality of pieces of data obtained by different types of exposure.

14. The signal processing apparatus according to claim 13, wherein
the part is any one of high exposure data, medium exposure data, and low exposure data.

15. The signal processing apparatus according to claim 1, wherein
the recognition unit performs the recognition processing using only a difference, which is a part of the data, between the frame and a past frame captured before the frame.

16. The signal processing apparatus according to claim 1, wherein
the recognition unit uses a recognition result of each frame as an input for a next frame to recurrently connect recognition processing for each frame.

17. The signal processing apparatus according to claim 16, wherein
the recognition unit performs the recognition processing, for second and subsequent frames among the plurality of frames, using a learning model smaller than a learning model used for an initial frame.

18. The signal processing apparatus according to claim 1, wherein
the recognition unit performs the recognition processing using a convolutional neural network (CNN).

19. A signal processing method performed by a signal processing apparatus, comprising
performing, when performing recognition processing for each frame of a plurality of frames, the recognition processing, for at least a part of the frames, using only a part of data in an entire frame.

20. A program that causes a computer to function as
a recognition unit that performs, when performing recognition processing for each frame of a plurality of frames, the recognition processing, for at least a part of the frames, using only a part of data in an entire frame.
